# EUROPEAN PATENT APPLICATION

(11) **EP 2 422 619 A1**
(43) Date of publication of application: **29.02.2012**
(21) Application number: 10174524.8
(22) Date of filing: 31.08.2010
(51) Int. Cl.: A01N 25/02, A01N 25/30, A01N 51/00

(54) **Neonicotinyl formulations**

(71) Applicant: Cheminova A/S, 7620 Lemvig (DK)
(72) Inventor: Battal, Turgut, 7600 Struer (DK)
(74) Representative: Rasmussen, Torben Ravn

(57) **Abstract**

Liquid neonicotinyl formulations comprising DMSO as solvent and an emulgator system selected among compounds having an ethylenglycol-propylenglycol co-polymeric chain as well as mixtures thereof.

## Description

### Field of Technology

The present invention relates to neonicotinyl formulations comprising DMSO as solvent and an emulgator system selected among compounds having an ethylenglycol-propylenglycol co-polymeric chain as well as mixtures thereof. The concentrated formulations are provided as soluble liquids (SL formulations)

### Background

The use of synthetic insecticides to control insect pests in crops is a universal practice. This practice has gained a high degree of commercial success because it has been shown that such control can increase crop yield. However, effective use of insecticides requires sound management in view of insect resistance and environmental and worker exposure concerns. One solution applied to this problem has been the provision of new, more highly active insecticides in order to reduce the need for older acutely toxic insecticides and to reduce environmental loading rates.

One new class of insecticides that is gaining significant recognition in the market place is the so-called "neonicotinyl" insecticides. Compounds of this class include, for example, the compounds imidacloprid, thiacloprid, acetamiprid, clothianidin, and thiamethoxam that are described in US patent nos. 4,742,060; 4,849,432; 5,304,566; and US 5,245,040 and European patent application no. EP580553-A2, respectively.

Canadian patent application No. CA 2605219-A1 (WO 2006/111279-A1) describes oil-based suspension concentrates comprising a neonicotinyl insecticides and polymeric alcohol ethoxylates. In United States patent application no. US 2004/0157743-A1 the use of fatty alcohol ethoxylates as penetration promoters for neonicotinyl insecticides is described. US patent applications Nos. US 2004/0157745-A1 and US 2007/0281860-A1 disclose neonicotinyl insecticides oil based suspension concentrate formulations comprising mineral or vegetable oils in combination with various polymeric penetration promoters. United States patent no. US 5,521,176 disclose solid formulations comprising mixtures of organophosphate insecticides and neonicotinyl insecticides, wherein one or more compounds having a ethylenglycol-, propylenglycol- or ethylenglycol-propylenglycol co-polymeric chain is added as an active ingredient stabilizer. The use of DMSO as a solvent in combination with propylene carbonate as co-solvent in neonicotinyl insecticides formulations is disclosed in US patent application no. US 2008/0255204-A1.

There is a continuous need for new and alternative formulation solutions which allow low-foam formulations comprising crop protectant ingredients, e.g. the neonicotinyl insecticides, to be produced which have good technical properties, for example good storage stability even during storage under cold conditions for a prolonged period of time, and uniform and high biological activity and making use of environmental and user friendly ingredients.

### Description of the invention

An object of the present invention is to provide liquid neonicotinyl insecticide formulation compositions with high insecticidal activity using environmental friendly ingredients and in addition, formulations that at the same time is so composed as to provide stability of the neonicotinyl insecticides and the formulation itself during long term storage.

The formulations according to the invention exhibit a highly favorable foam behavior when diluted with water prior to application, and during spraying in the course of application, and as such no defoamers need necessarily be added to the formulations. The consequences of unfavorable foam behavior are often overflow of spray apparatus, contamination of the environment, uneven spray deposits on the crops, and crop protectant ingredient residues in the spray apparatus.

The liquid formulations according to the invention comprise
a) At least one neonicotinyl insecticide;
b) DMSO as a solvent;
c) a co-solvent selected among DMSO freezing point depressants;
d) an emulgator system selected among compounds having a ethylenglycol-propylenglycol co-polymeric chain as well as mixtures thereof; and
e) optionally further auxiliaries

Insecticides from the class of the neonicotinyl can be described by the following formula: 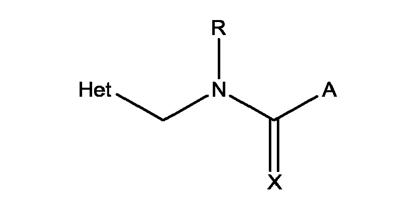
Het is a heterocycle selected from the following group of heterocycles: 2-Chlorpyrid-5-yl, 2-Methylpyrid-5-yl, 1-Oxido-3-pyridino, 2-Chlor-1-oxido-5-pyridino, 2,3-Dichlor-1-oxido-5-pyridino, Tetrahydrofuran-3-yl, 5-Methyl-tetrahydrofuran-3yl, 2-Chlorothiazol-5-yl,
A is Methyl, N(R1)(R2) or S(R2),
   in which
   R1 is Hydrogen, Cl-C6-Alkyl, Phenyl-Cl-C4-Alkyl, C3-C6-Cycloalkyl, C2-C6-Alkenyl or C2-C6-Alkinyl, and
   R2 is Cl-C6-Alkyl, C2-C6-Alkenyl, C2-C6-Alkinyl -C(=O)-CH₃ or Benzyl,
R is Cl-C6-Alkyl, C2-C6-Alkenyl, C2-C6-Alkinyl, -C(=O)-CH₃ or Benzyl or together with R2 is one of the following groups:
   -CH₂-CH₂-, -CH₂-CH₂-CH₂-, -CH₂-O-CH₂-, -CH₂-S-CH₂-, -CH₂-NH-CH₂-, -CH₂-N-(CH₃)-CH₂- and
X is N-NO₂, N-CN or CH-NO₂.

The neonicotinyl insecticide compounds are preferably selected among imidacloprid, nitenpyram, dinotefuran, acetamiprid, thiamethoxam, thiacloprid and clothianidin; and in particular imidacloprid

The concentrated formulations may contain up to 40% by weight neonicotinyl insecticide, component a), based on the weight of the formulation, preferably, between 0.1 and 40% by weight and, more preferably, between 1 and 35% by weight, even more preferably 5-30% and most preferably between 10-25%.

In a preferred embodiment the amount of DMSO (dimethyl sulfoxide), component b), is between 40-90% by weight, preferably between 50-85% by weight, more preferably 55-80% by weight, and most preferably 60-80% by weight.

DMSO is a polar aprotic solvent that dissolves both polar and non-polar compounds and is miscible in a wide range of organic solvents as well as water. DMSO has a high melting point (approximately 18.5°C). Due to the relatively high melting point a co-solvent capable of lowering the freezing point of DMSO is advantageously added to lower the overall freezing point of the concentrated formulation to keep it in a liquid state even at temperatures close to or below the freezing point (i.e. below 0°C). Accordingly, the DMSO miscible co-solvent is preferably selected among DMSO freezing point depressants, e.g. water and organic solvents such as alcohols, ethers, ketones, chlorinated solvents and aromatic hydrocarbons. Water is preferred. For at list of examples of DMSO miscible organic solvents at ambient temperatures see Gaylord Chemical Company L.L.C. Literature, Bulletin #102B, published November 2007.

In a preferred embodiment the amount of co-solvent, component c), is between 0.1-10% by weight, preferably between 0.5-8% by weight, more preferably 1-6% by weight, even more preferably 2-5% and most preferably 2.5- 4.5% by weight.

In general, the weight ratio between solvent b) and co-solvent c) is between 1:0.001-1:0.5, preferably between 1:0.005- 1:0.2, more preferably between 1:0.01-1:0.15 and most preferably between 1:0.02-1:0.1.

For the purpose of this invention, the emulgator system selected among compounds having an ethylenglycol-propylenglycol co-polymeric chain as well as mixtures thereof are suitable in the liquid state at ambient temperature. Preferably, the compound(s) is/are in a liquid state at a temperature of about 20°C and preferably remains in the liquid state in the temperature interval of 0-30°C and more preferably in the interval of -10 - 50 °C. However, compounds in the solid state at ambient temperatures may also be used as long as they remain solubilised in the final concentrated liquid formulation.

The emulgator system d) is chosen among compounds having an ethylenglycol-propylenglycol co-polymeric chain as well as mixtures thereof and may be selected among random co-polymer compounds comprised of ethylene oxide (EO) and propylene oxide (PO) units or may be selected among non-random polymer compounds (EO/PO block co-polymer) comprised of blocks of ethylene oxide (EO) and propylene oxide (PO) units and in either case such compound(s) optionally being end-capped. Combinations of both random and non-random EO/PO co-polymers may also be used as emulgators. Whereas a random copolymer of EO and PO units can be synthesized directly from an appropriate mixture of ethylene and propylene oxide, and thus the different oxide molecules are added to the polymer chain in a random sequence, the non-random block copolymers are synthesized sequentially. First, a central block is commonly polymerized from one type of alkylen oxide (e. g. PO), then one or more outer blocks are added to the ends in a second polymerization step using another alkylen oxide (e. g. EO). Poloxamers are linear A-B-A triblock copolymers of EO and PO having the general formula (EO)ₓ(PO)_{y}(EO)_{x,} where x, y are the average number of EO and PO monomer units in the block. Meroxapols are linear triblock copolymers similar to poloxamers but with a reversed (B-A-B) structure and hence the general formula (PO)_{y}(EO)ₓ(PO)_{y.}

The EO/PO co-polymers or their end-capped derivatives, which are to be used, in accordance with the invention, as component (d), are known per se. Preferred in accordance with the invention are the optionally end-capped ethylene oxide/propylene oxide block copolymers (non-random type) selected among polymers of the formula (Ia), (Ib), (1c), (Id).

R₁O-(C₂H₄O)p (C₃H₆O)q (C₂H₄0)ᵣ R₂ (Ia)

R₁O-(C₃H₆O)p-(C₂H₄O)q-(C₃H₆O),-R₂ (Ib)

R₁O-(C₂H₄O)p (C₃H₆O)q R₂ (Ic)

R₁O-(C₃H₆O)p-(C₂H₄O)q-R₂ (Id)

where p, q, r independently of one another represent an integer of 2 or more and R₁, R₂ independently of one another are hydrogen, C₁-C₄ alkyl, C₁-C₄ alkyl-CO, or derivatives thereof suitable for end-capping.

To obtain a suitable liquid at ambient temperatures it is generally desired to select the values p, q, r independently of each other among integers of 300 or less. Preferably, p, q, r independently of one another represent an integer of 200 or less, such as 150 or less.

Suitably, p, q, r independently of one another correspond to a value in the range of from 2 to 300, preferably from 5 to 200 and in particular from 10 to 150.

The end-capping groups R₁ and R₂ may in particular, when present, independently of one another be selected among methyl, t-butyl and acetyl groups. The specific choice of end-capping group is of less importance for the formulation. Thus, the present invention is intended to cover any end-capping group suitable for the purpose, i.e. the formation of a stable liquid formulation.

The random co-polymers resembles the block co-polymers of structure (Ic)/(Id) with the difference being the random distribution of the EO and PO monomer units.

Preferably, the weight-average molecular weight (g/mol) of both the random co-polymers and the block co-polymers to be used in accordance with the invention is at least 500, preferably at least 1000 and in particular at least 1800. As a rule, co-polymers are used whose weight-average molecular weight is less than 25000 preferably less than 15000 and in particular less than 10000. Preferred ranges of weight-average molecular weights are 500 to 15000, preferably 1000 to 10000, more preferably 1500 to 8000 and in particular 1700 to 4000. Also, the co-polymers have a preferred range of EO units from about 5 to about 85 % by weight, more preferably from about 10 to about 60 % by weight and a most preferred range of about 15 to about 50 % by weight.

A large number of representatives of such liquid block co-polymers are readily commercially available. EO/PO block co-polymers mentioned by way of example in this context are those which are available from BASF under the tradename Pluronic, e.g Pluronic PE 4300 and Pluronic PE 6200, Antarox L-64 available from Rhodia, available under the tradename Synperonic from Croda such as Synperonic PE L/31, Synperonic PE L/64, Synperonic PE L/44, and liquid random co-polymers available from BASF under the tradename Pluriol e.g. Pluriol A 2000 PE, Pluriol A 4000 PE plus and Pluriol A2600 PE plus; or available from Cognis under the tradename Aqnique, e.g. Agnique ED 0001 or from Cognis under the tradename Breox e.g. Breox 50A 50, Breox 50A 140 and Breox 50 A 225.

The EO/PO block co-polymers of the formula (Ia), (Ic) (Ic) are preferred - as well as the random co-polymers. Especially EO/PO block co-polymers of the formula (Ia) are preferred, e.g. block co-polymers of the Pluronic PE series such as PE 3500, PE 4300, PE 4400, PE 6100, PE 6200, PE 6400, PE 6800, PE 8100, PE 9200, PE 10100, PE 10500.

In a preferred embodiment the amount of the emulgator system chosen among compounds having an ethylenglycol-propylenglycol co-polymeric chain, component d), is between 0.1-20% by weight, preferably between 0.5-15% by weight, more preferably 1-10% by weight, and most preferably 1.5-6% by weight.

The formulation may also contain, as an optional auxiliary (e), one or more surfactants. Surfactants are, for example, non-aromatic-based surfactants, based for example on heterocycles, olefins, aliphatics or cycloaliphatics, examples being surface-active, mono- or poly-alkyl-substituted and subsequently derivatized, e.g., alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based surfactants, examples being mono-, or poly-alkyl-substituted and subsequently derivatized, e.g., alkoxylated, sulfated, sulfonated or phosphated benzenes or phenols. Such surface active compounds are generally known and readily available on a commercial scale.

Further optionally auxiliaries, component e), which may be included in the liquid concentrated formulations as described herein are pH-adjusters, thickeners, antifreeze agents, preservatives, antifoaming and defoamer agents, spreading agents, stickers, UV-protectants, stabilizers, and one or more additional insecticides different from the neonicotinyls and/or fungicides. Such auxiliaries are generally known within the art of formulation chemistry, and although a specific ingredient is classified as falling within one category, it may well serve the purpose of any of the others. The amount of further auxiliaries is preferably between 0-10% by weight.

The pH adjusters include both acids and bases of the organic or inorganic type. Suitable pH adjusters include organic acids and alkali metal compounds. The organic acids include those such as citric, malic, adipic, cinnamic, fumaric, lactic, maleic, succinic, and tartaric acid, and the mono-, di-, or tribasic salts of these acids are suitable organic acid salts. Suitable salts of these acids are the soluble or meltable salts and include those salts in which one or more acidic protons are replaced with a cation such as sodium, potassium, calcium, magnesium, and ammonium. Alkali metal compounds include hydroxides of alkali metals such as sodium hydroxide and potassium hydroxide, carbonates of alkali metals such as sodium carbonate and potassium carbonate, hydrogencarbonates of alkali metals such as sodium hydrogencarbonate and alkali metal phosphates such as sodium phosphate.

Thickeners, stickers and film-forming agents include starches, gums, casein and gelatine, polyvinyl pyrrolidones and polyvinylpyrrolidone/polyvinylacetate copolymers (e.g. from the Agrimer series available from ISP), polyethylene and polypropylene glycols, polyacrylates, polyacrylamides, polyethyleneimines, polyvinyl alcohols, polyvinyl acetates, and methyl-, hydroxyethyl- and hydroxypropylcelluloses and derivatives thereof

Examples of the antifreezing agent include ethylene glycol, diethylene glycol, propylene glycol and the like.

Typical preservatives include methyl and propyl parahydroxybenzoate, 2-bromo-2-nitro-propane-1,3-diol, sodium benzoate, formaldehyde, glutaraldehyde, 0-phenylphenol, benzisothiazolinones, 5-chloro-2-methyl-4-isothiazolin-3-one, pentachlorophenol, 2-4-dichlorobenzylalcohol and sorbic acid and derivatives thereof.

The optional additional insecticide (including acaricides and nematicides) may also be added to the formulation provided that the additional insecticide does not interfere in a negative way with the stability of the final formulation. The presence of the optional additional insecticide may also enhance the activity of the neonicotinyl. An additional insecticide may be utilized if broadening of the spectrum of control or preventing the build-up of resistance is desired. Suitable examples of such additional active compounds are: abamectin, acephate, acrinathrin, alanycarb, albendazole, aldicarb, alphamethrin, amitraz, azadirachtin, azinphos, azocyclotin, Bacillus thuringiensis, bendiocarb, benfuracarb, bensultap, bephenium, betacyfluthrin, bifenazate, bifenthrin, bistrifluron, BPMC, brofenprox, bromophos, brotianide, bufencarb, buprofezin, butamisole, butocarboxin, butylpyridaben, cadusafos, cambendazole, carbaryl, carbofuran, carbophenothion, carbosulfan, cartap, chloethocarb, chloroethoxyfos, chlorfenapyr, chlorofenvinphos, chlorofluazuron, chloromephos, chlorpyrifos, chromafenozide, cis-resmethrin, clocythrin, clofentezine, clorsulon, closantel, cyanophos, cycloprothrin, cyfluthrin, cyhalothrin, cyhexatin, cypermethrin, cyromazine, deltamethrin, demeton, diamphenethide, dibromosalan, dichlorophen, difenthiuron, diazinon, dichlofenthion, dichlorvos, dicliphos, dicrotophos, diethion, diethylcarbamazine, diflubenzuron, dimethoate, dimethylvinphos, dioxathion, disulfoton, edifenphos, emamectin(-benzoate), epsiprantel, esfenvalerate, ethiofencarb, ethion, ethiprole, ethofenprox, ethoprophos, etoxazole, etrimphos, febantel, fenamiphos, fenbendazole, fenzaquin, fenbutatin oxide, fenitrothion, fenobucarb, fenothiocarb, fenoxycarb, fenpropathrin, fenpyrad, fenpyroximate, fenthion, fenvalerate, fipronil, flonicamid, fluazuron, flubendazole, flucycloxuron, flucythrinate, flufenoxuron, flufenprox, fluvalinate, fonophos, formothion, fosthiazate, fubfenprox, furathiocarb, gamma-cyhalothrin, haloxon, heptenophos, hexaflumuron, hexachlorophene, hexythiazox, indoxacarb, iprobenfos, isazophos, isofenphos, isoprocarb, isoxathion, ivermectin, lambdacyhalothrin, levamisole, lufenuron, malathion, mebendazole, mecarbam, mevinphos, mesulfenphos, metaldehyde, methacrifos, methamidophos, methidathion, methiocarb, methomyl, methoxyfenozide, methyridine, metolcarb, milbemectin, monocrotophos, morantel, naled, netobimin, niclopholan, niclosamide, nitroxynil, omethoate, oxamyl, oxfendazole, oxibendazole, oxyclozanide, oxydemethon M, oxydeprofos, parathion A, parathion M, parbendazol, permethrin, phenothiazine, phenthoate, phorate, phosalone, phosmet, phosphamidon, phoxim, pirimicarb, pirimiphos, praziquantel, profenofos, promecarb, propaphos, propoxur, prothiofos, prothoate, pymetrozin, pyrachlophos, pyrantel, pyridaphenthion, pyresmethrin, pyrethrum, pyridaben, pyrimidifen, pyriproxifen, quinalphos, rafoxanide, rynaxypyr, salithion, sebufos, silafluofen, spinosad, spinetoram, spirodiclofen, spiromesifen, spirotetratmat, sulfotep, sulprofos, tebufenozid, tebufenpyrad, tebupirimiphos, teflubenzuron, tefluthrin, temephos, terbam, terbufos, tetra-chlorvinphos, tetramisole, thenium, thiabendazole, thiafenox, thiodicarb, thiofanox, thiomethon, thionazin, thiophanate, thuringiensin, tralomethrin, triarathen, triazophos, triazuron, trichlorfon, triclabendazole, triflumuron, trimethacarb, vamidothion, XMC, xylylcarb, zetamethrin.

Further, inclusion of other known active compounds, such as fungicides, herbicides, fertilisers or growth regulators, is also possible.

In summary the liquid formulations according to the invention comprise
a) At least one neonicotinyl insecticide in an amount of 0.1-40%;
b) DMSO in an amount of 40-90%;
c) a co-solvent selected among DMSO freezing point depressants in an amount of 0.1-10%;
d) an emulgator system selected among compounds having an ethylenglycol-propylenglycol co-polymeric chain as well as mixtures thereof in an amount of 0.1-20%; and
e) further auxiliaries in an amount of 0-10%.

Common for all ingredients used according to the invention is that they be selected as not to cause any undesirable side effects when used in plant or seed protection, e.g. to induce phytotoxicity.

The concentrated liquid formulations according to the invention are prepared in a conventional manner, by mixing all ingredients, preferably under stirring, and optionally prepared under elevated temperatures to ease formation of a homogeneous composition.

Another object of the present invention is to provide formulations as described herein for use in a method for the control of undesirable insects including protection of crops against such insects, said method comprise e.g. applying the formulations preferably in diluted form (e.g. aqueous diluted form), to the insects or to plants, plant seeds, soil, surfaces and the like infested with insects or likely to be occupied by insects. The formulations according to the invention are applicable for the control of quite a number of insects, primarily sucking and chewing insects, in areas grown with agricultural and plantation crops in particular, but may advantageously also be used in other places infected with undesired insects, e. g. areas where insects live or their eggs hatch outdoor as well as indoor. Use of the formulations as described herein comprises delivering to the target a formulation in an insecticidal effective and adequate amount. An effective amount is an amount sufficient to provide adequate insect control, i.e. an amount that has the ability to combat the harmful insects sufficiently to cause a measurable reduction in the exposed insect population. An adequate amount cannot generally be defined, since it depends upon, e.g., the harmful insects to be controlled, method of application, the type or size of plant or seed to be protected, and climate condition at time of application. Suitably the formulations are diluted for crop protection as to deliver an amount between 5-1000 grams pr. hectare, preferably 10-800 g/ha, more preferably 20-500 g/ha. and even more preferably between 50-400 g/ha. In the treatment of seeds, effective aggregate amounts of the neonicotinyl insecticide between 0.01 and 20 g per kilogram of seed, preferably between 0.1 and 10 g per kilogram of seed.

The treatment of plants and parts of plants according to the invention may be carried out directly or by action on their environment (e.g. soil application), habitat or storage area according to customary treatment methods, for example by dipping, spraying, evaporating, atomizing, broadcasting, brushing-on and, in the case of propagation material, in particular in the case of seeds, furthermore by one- or multi-layer coating.

According to the invention, it is possible to treat and protect all plants including parts of plants against agricultural pests. Plants are to be understood as meaning all plants and plant populations such as desired and undesired wild plants or crop plants (including naturally occurring crop plants). Parts of plants are to be understood as meaning all above-ground and below-ground parts and organs of plants, such as shoot, leaf, flower and root, examples which may be mentioned being leaves, needles, stems, trunks, flowers, fruit-bodies, fruits and seeds and also roots, tubers and rhizomes. Parts of plants also include harvested plants and vegetative and generative plant propagation material, for example seedlings, tubers, rhizomes, cuttings and seeds (including stored seeds).

If a fungicide is added to the formulations described herein, in particular when applied as a seed-dressing agent, such fungicide is preferably selected among:
A) azoles, in particular: bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole; prochloraz, pefurazoate, imazalil, triflumizole, cyazofamid; benomyl, carbendazim, thiabendazole, fuberidazole; ethaboxam, etridiazole, hymexazole;
B) strobilurins, in particular: azoxystrobin, dimoxystrobin, enestroburin, fluoxastrobin, kresoxim-methyl, metominostrobin, orysastrobin, picoxystrobin, pyraclostrobin, trifloxystrobin, or methyl (2-chloro-5-[1-(3-methylbenzyloxy-imino)ethyl]benzyl)carbamate, methyl (2-chloro-5-[1-(6-methylpyridin-2-yl-methoxyimino)ethyl]benzyl)carbamate, methyl 2-(ortho-((2,5-dimethylphenyloxymethylene)phenyl)-3-methoxyacrylate;
C) carboxamides, in particular: carboxin, benalaxyl, boscalid, fenhexamid, flutolanil, furametpyr, mepronil, metalaxyl, mefenoxam, ofurace, oxadixyl, oxycarboxin, penthiopyrad, thifluzamide, tiadinil, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide, N-(3',4'-dichloro-5-fluorobiphenyl-2-yl)-3-difluoromethyl-1-methylpyrazole-4-carboxamide; 3,4-dichloro-N-(2-cyanophenyl)isothiazol-5-carboxamide; dimethomorph, flumorph; flumetover, fluopicolide (picobenzamid), zoxamide; carpropamid, diclocymet, mandipropamid; N-(2-{4-[3-(4-chlorophenyl)prop-2-ynyloxy]-3-methoxyphenyl}ethyl)-2-methanesulfonyl-amino-3-methylbutyramide, N-(2-{4-[3-(4-chlorophenyl)-prop-2-ynyloxy]-3-methoxyphenyl}ethyl)-2-ethanesulfonylamino-3-methyl-butyramide;
D) heterocylic compounds, in particular: fluazinam, pyrifenox; bupirimate, cyprodinil, fenarimol, ferimzone, mepanipyrim, nuarimol, pyrimethanil; triforine; fenpiclonil, fludioxonil; aldimorph, dodemorph, fenpropimorph, tridemorph; fenpropidin, iprodione, procymidone, vinclozolin; famoxadone, fenamidone, octhilinone, probenazole; amisulbrom, anilazine, diclomezine, pyroquilon, proquinazid, tricyclazole; 5-chloro-7-(4-methylpiperidin-1-yl)-6-(2,4,6-trifluorophenyl)-[1,2,4]triazolo[1,5-a]pyrimidine, 2-butoxy-6-iodo-3-propylchromen-4-one; acibenzolar-S-methyl, captafol, captan, dazomet, folpet, fenoxanil, quinoxyfen; 3-[5-(4-chlorophenyl)-2,3-dimethylisoxazolidin-3-yl]pyridine;
E) carbamates, in particular: mancozeb, maneb, metam, metiram, ferbam, propineb, thiram, zineb, ziram; benthiavalicarb, diethofencarb, iprovalicarb, flubenthiavalicarb, propamocarb; methyl 3-(4-chlorophenyl)-3-(2-isopropoxycarbonylamino-3-methyl- butyrylamino)propanoate; and
F) other active compounds, selected from guanidines: dodine, iminoctadine, guazatine; antibiotics: kasugamycin, streptomycin, polyoxine, validamycin A; nitrophenyl derivates: binapacryl, dinocap, dinobuton; sulfur-containing heterocyclyl compounds: dithianon, isoprothiolane; organometal compounds: fentin salts, such as fentin-acetate; organophosphorus compounds: edifenphos, iprobenfos, fosetyl, fosetyl- aluminum, phosphorous acid and its salts, pyrazophos, tolclofos-methyl; organochlorine compounds: chlorothalonil, dichlofluanid, flusulfamide, hexachlorobenzene, phthalide, pencycuron, quintozene, thiophanate- methyl, tolylfluanid; inorganic active compounds: Bordeaux mixture, copper acetate, copper hydroxide, copper oxychloride, basic copper sulfate, sulfur; others: cyflufenamid, cymoxanil, dimethirimol, ethirimol, furalaxyl, metrafenone and spiroxamine;

Crops (including their seeds) the formulations may be applied to include: rice, almonds, citrus, nectarines, cherries, apples, celery, grapes, broccoli, cereals, brussels sprouts, celery, lentils, mushroom, strawberries, onions, cabbage, cauliflower, cotton, persimmon, cucumbers, lettuce, cucurbits, melons, avocado, figs, peaches, pears, apricots, potatoes, beans, soybeans, beets, tomato, berries, mint, squash, eggplant, pepper, radish, spinach, sweet corn, grasses, clover, and ornamentals and forests; The undesirable insects include rice water weevil, green rice leafhopper, brown planthopper, white-backed planthopper, grass leaf roller, rice stem borer, smaller brown planthopper, mosquito, navel orangeworm, peach twig borer, apple aphid, cereal aphid, redbanded leafroller, obliquebanded leafroller, plum curculio, white apple leafhopper, spotted tentiform leafminer, tarnished plant bug, vegetable leafminer, cabbage looper, imported cabbageworm, granulate cutworm, black cutworm, fall armyworm, beet armyworm, diamondback moth, bollworm (corn earworm), tobacco budworm, pink bollworm, lygus bugs, cotton leaf perforator, boll weevil, cotton fleahopper, saltmarsh caterpillar, whitefly, cotton aphid, oriental fruit moth, green fruitworm, lesser peachtree borer, rose chafer, pear psylla, codling moth, green fruitworm, Colorado potato beetle, potato leafhopper, aster leafhopper, potato flea beetle, potato aphid, potato tuberworm, potato psyllid, green cloverworm, Mexican bean beetle, bean leaf beetle, soybean looper, velvetbean caterpillar, leafhoppers, cutworm complex, European corn borer, Southern armyworm, gypsy moth, western spruce budworm, eastern spruce budworm, tussock moth, tent caterpillar, fall webworm, canker worm, and pine sawfly. Within the scope of this invention such crops further comprise those that are resistant, either by transgenic means or selected by classical means, to pesticidal active ingredients and/or those that are resistant to certain pests, for example *Bacillus thuringiensis* (Bt) pest-resistant crops.

While concentrated formulations are preferred as commercially available goods, the end consumer uses, as a rule, dilute formulations. These formulations may be diluted to concentrations down to between 0.0001 and 4% of active ingredient (a.i.) by weight of total solution. In general the a.i. concentrations are between 0.001 and 3% by weight, preferably 0.005 to 2% by weight.

The invention is illustrated by the following examples. In the examples the following ingredients are mentioned with reference to their trade names:
Pluronic PE 3500: Co-polymer of formula (Ia, R₁, R₂ = H) with an average molar mass of approx. 1900 g/mol, 50%EO units by weight.
Pluronic PE 4300: Co-polymer of formula (Ia, R₁, R₂ = H) with an average molar mass of approx. 1750 g/mol, 30%EO units by weight.
Pluronic PE 6200: Co-polymer of formula (Ia, R₁, R₂ = H) with an average molar mass of approx. 2450 g/mol, 20%EO units by weight.
Pluronic PE 6400: Co-polymer of formula (Ia, R₁, R₂ = H) with an average molar mass of approx. 2900 g/mol, 40%EO units by weight.

Agrimer VA6: A Vinylpyrrolidone/Vinylacetate copolymer available from ISP

### Example 1

A formulation was prepared by mixing the below ingredients under stirring

| | Amount (%w/w) |
|---|---|
| a) Imidacloprid | 17.45 |
| b) DMSO | 77.05 |
| c) Water | 3.0 |
| d) Pluronic PE 6200 | 1.8 |
| e) Agrimer VA6 | 0.7 |

The formulation appears as a homogeneous-slightly yellow-clear liquid at room temperature. Standard storage stability tests performed at 0 °C (according to MT 39.3, CIPAC Handbook J, p.126, 2000) for 7 days results in no separation of solid and/or liquid.

The active content is stable at elevated temperatures of 54 °C (according to MT 46.3, CIPAC Handbook J, p. 128, 2000) for 2 weeks.

Persistent foam is measured as 0 ml according to MT 47.2 (CIPAC Handbook J, p.152, 2000), 250 µL formulation in Standard water D after 1 min. For Imidacloprid SL formulations objective is no foam or less than 5 ml as required according to FAO Specifications and Evaluations for Imidacloprid, Soluble Concentrate May 2006, p.19.

**Results listed in the table below**

| **Parameter** | **Method** | **Example 1** |
|---|---|---|
| Persistent foam | MT 47.2 , 250 µL formulation in Standard water D after 1 min | 0 ml |
| Storage stability at 54°C/14 days | CIPAC MT 46.3 | Stable, no loss of active |
| Stability at 0°C 7 days | CIPAC MT 39.3 | No separation |

### Example 2

A series of formulations were prepared, all of which appeared as clear homogenous liquids after preparation.

| | (%w/w) | | | | | |
|---|---|---|---|---|---|---|
| | **2a** **(com)** | **2b** **(com)** | **2c** | **2d** | **2e** | **2f** |
| a) Imidacloprid | 17.45 | 17.45 | 17.45 | 17.45 | 17.45 | 17.45 |
| b) DMSO | 80.05 | 78.85 | 77.05 | 75.60 | 73.60 | 74.35 |
| c) Water | - | 3.0 | 3.0 | 3.25 | 3.25 | 2.5 |
| d) Pluronic PE 6200 | - | - | - | 3.0 | 5.0 | 5.0 |
| d) Pluronic PE 6400 | 1.8 | - | 1.8 | - | - | - |
| e) Agrimer VA6 | 0.7 | 0.7 | 0.7 | 0.7 | 0.7 | 0.7 |
| Stability | No | No | Yes | Yes | Yes | Yes |
| Foam | Yes | Yes | Yes | Yes | Yes | Yes |

| | | | | | | |
|---|---|---|---|---|---|---|
| (com) = Comparative example | | | | | | |

| | (%w/w) | | | | |
|---|---|---|---|---|---|
| | **2g** | **2h** | **2i** | **2j** | **2k** |
| a) Imidacloprid | 18.28 | 16.86 | 17.56 | 17.56 | 18.28 |
| b) DMSO | 75.72 | 77.64 | 77.94 | 77.94 | 76.22 |
| c) Water | 3.5 | 3.0 | 3.0 | 3.0 | 3.0 |
| d) Pluronic PE 3500 | - | - | 1.8 | - | - |
| d) Pluronic PE 4300 | - | - | - | 1.8 | 1.8 |
| d) Pluronic PE 6200 | 1.8 | 1.8 | - | - | - |
| e) Agrimer VA6 | 0.7 | 0.7 | - | - | 0.7 |
| Stability | Yes | Yes | Yes | Yes | Yes |
| Foam | Yes | Yes | Yes | Yes | Yes |

| | (%w/w) | | | |
|---|---|---|---|---|
| | **2l** | **2m** | **2n** | **2o** |
| a) Imidacloprid | 16.86 | 17.45 | 17.63 | 17.45 |
| b) DMSO | 76.89 | 76.80 | 45.0 | 72.85 |
| c) Water | 3.75 | 3.25 | - | 4.0 |
| c) NMP | - | - | 32.37 | - |
| d) Pluronic PE 4300 | 1.8 | 1.5 | - | - |
| d) Pluronic PE 6200 | - | 0.3 | 5.0 | 5.0 |
| e) Agrimer VA6 | 0.7 | 0.7 | - | 0.7 |
| Stability | Yes | Yes | Yes | Yes |
| Foam | Yes | Yes | Yes | Yes |

| | | | | |
|---|---|---|---|---|
| Stability: Yes means no phase separation after storage at 0°C for 14 days (CIPAC MT 39.3) Foam: Yes means no foam or less than 5 ml as required according to FAO Specifications and Evaluations for Imidacloprid, Soluble Concentrate May 2006, p.19. | | | | |

### Example 3

A series of formulations were prepared and compared with a commercial imidacloprid SL formulation product, sold under the trade name Confidor 200 SL from Bayer CropScience.

| | (%w/w) | | | |
|---|---|---|---|---|
| | **3a** | **3b** **(com)** | **3c** **(com)** | **3d** **(com)** |
| a) Imidacloprid | 17.45 | 17.45 | 17.45 | 17.45 |
| b) DMSO | 77.75 | 77.75 | 77.75 | 77.75 |
| c) Water | 3.0 | 3.0 | 3.0 | 3.25 |
| d) Pluronic PE 6200 | 1.8 | - | - | 3.0 |
| Emulsogen TS 290 | - | 1.8 | - | - |
| Emulsogen EL 360 | - | - | 1.8 | - |
| Genapol X-150 | - | - | - | 1.8 |

| | | | | |
|---|---|---|---|---|
| (com) = Comparative example | | | | |

Emulagator system used in the comparative formulations (all available from Clariant):
Emulsogen TS 290 is a Tristyryl phenol ethoxylate with 29 EO units
Emulsogen EL 360 is a castor oil ethoxylate with 36 EO units
Genapol X-150 is a Iso-tridecyl alcohol ethoxylate with 15 EO units.

| **Parameter** | **Method** | **3a** | **3b** (com) | **3c** (com) | **3d** (com) | **Confidor** (com) |
|---|---|---|---|---|---|---|
| Persistent foam | MT 47.2,250 µL formulation in Standard water D after 1 min | 0 ml | 11 ml | 18 ml | 17 ml | 11 ml |
| Stability at 0°C 7 days | CIPAC MT 46.1 | N.S. | N.S. | Froze | N.S | N.S |

| | | | | | | |
|---|---|---|---|---|---|---|
| N.S. No phase separation | | | | | | |

Formulation 3a meets the required value for persistent foam of less than 5 ml after 1 minute according to FAO Specifications and Evaluations for Imidacloprid, Soluble Concentrate May 2006, p.19.

## Claims

1. A liquid formulation comprising
a) at least one neonicotinyl insecticide;
b) DMSO as a solvent;
c) a co-solvent selected among DMSO freezing point depressants;
d) an emulgator system selected among compounds having an ethylenglycol-propylenglycol co-polymeric chain as well as mixtures thereof; and
e) optionally further auxiliaries

2. A liquid formulation according to claim 1 comprising
a) at least one neonicotinyl insecticide in an amount of 0.1-40%;
b) DMSO in an amount of 40-90%;
c) a co-solvent selected among DMSO freezing point depressants in an amount of 0.1-10%;
d) an emulgator system selected among compounds having an ethylenglycol-propylenglycol co-polymeric chain as well as mixtures thereof in an amount of 0.1-20%; and
e) further auxiliaries in an amount of 0-10%

3. The formulation according to claim 1 or 2, wherein the emulgator system d) is chosen among random co-polymer compounds comprised of ethylene oxide (EO) and propylene oxide (PO) units and/or is chosen among non-random polymer compounds comprised of blocks of ethylene oxide (EO) and propylene oxide (PO) units.

4. A formulation according to claim 3 wherein the emulgator system d) is chosen is chosen among polymers having weight-average molecular weights between 500 to 25000 (g/mol), suitably between 500 to 15000, preferably 1000 to 10000, more preferably 1500 to 8000 and in particular 1700 to 4000.

5. A formulation according to claim 4 wherein the emulgator system d) is chosen among polymers having a range of ethylene oxide units (EO) from about 5 to about 85 % by weight, more preferably from about 10 to about 60 % by weight and a most preferred range of about 15 to about 50 % by weight.

6. The formulation according to claim 3, wherein the emulgator system d) is chosen is chosen among polymers of the formula (Ia), (Ib), (1c), (Id).
R₁O-(C₂H₄O)p-(C₃H₆O)q-(C₂H₄O)ᵣ-R₂ (Ia)
R₁O-(C₃H₆O)p-(C₂H₄O)q-(C₃H₆O)ᵣ R₂ (Ib)
R₁O-(C₂H₄O)p (C₃H₆O)q-R₂ (Ic)
R₁O-(C₃H₆O)p-(C₂H₄O)q-R₂ (Id)
where p, q, r independently of one another represent an integer of 2 or more and R₁, R₂ independently of one another are hydrogen, C₁-C₄ alkyl, C₁-C₄ alkyl-CO, or derivatives thereof suitable for end-capping.

7. A formulation according to claim 6 wherein the emulgator system d) is chosen among polymers of the formula (Ia).

8. A formulation according to claim 2 wherein the neonicotinyl insecticide a) is present in an amount between 1 and 35% by weight, even more preferably 5-30% and most preferably between 10-25%.

9. A formulation according to claim 2 wherein the DMSO is present in an amount of between 50-85% by weight, more preferably 55-80% by weight, and most preferably 60-80% by weight.

10. A formulation according to claim 2 wherein the co-solvent c) is present in an amount of between 0.5-8% by weight, more preferably 1-6% by weight, even more preferably 2-5% and most preferably 2.5- 4.5%.

11. A formulation according to claim 2 wherein the amount of the emulgator system d) present is between 0.5-15% by weight, more preferably 1-10% by weight, and most preferably 1.5-6% by weight.

12. A formulation according to any of the previous claims, further comprising one or more surfactants and/or one or more auxiliaries selected among pH-adjusters, thickeners, antifreeze agents, preservatives, antifoaming and defoamer agents, spreading agents, stickers, UV-protectants, stabilizers, and additional insecticides and/or fungicides.

13. A formulation according to any of the previous claims wherein the neonicotinyl insecticide(s) is chosen among imidacloprid, nitenpyram, dinotefuran, acetamiprid, thiamethoxam, thiacloprid and clothianidin.

14. A formulation according to any of the previous claims wherein the co-solvent c) is chosen among DMSO freezing point depressants, selected among water and organic solvents such as alcohols, ethers, ketones, chlorinated solvents and aromatic hydrocarbons, more preferably water.

15. A method for the control of insects, said method comprise applying a formulation according to claims 1 through 14 to insects; or to plants, plant seeds, soil, surfaces and the like infested with insects or likely to be occupied by insects.
